# EUROPEAN PATENT SPECIFICATION

(11) **EP 3 731 148 B1**
(45) Date of publication and mention of the grant of the patent: **18.05.2022**
(21) Application number: 18891083.0
(22) Date of filing: 19.12.2018
(51) Int. Cl.: G06K 19/07, G06K 19/077

(54) **ELECTRONIC TAG DEVICE**
ELEKTRONISCHE ETIKETTVORRICHTUNG
DISPOSITIF D'ÉTIQUETTE ÉLECTRONIQUE

(30) Priority: 20.12.2017 JP 2017244263
(43) Date of publication of application: 28.10.2020
(73) Proprietor: Toppan Printing Co., Ltd., Tokyo 110-0016 (JP)
(72) Inventor: TANAKA Junsuke, Tokyo 110-0016 (JP)
(74) Representative: Hoffmann Eitle
(86) International application number: PCT/JP2018/046814
(87) International publication number: WO 2019/124445

(56) References cited:
- WO-A1-2015/037187
- JP-A- 2001 357 370
- JP-A- 2010 072 965
- JP-A- 2017 215 837
- US-A1- 2013 146 669
- US-A1- 2017 308 845

## Description

### [Technical Field]

The present invention relates to an electronic tag device used for a baggage-attached electronic tag.

### [Background Art]

Conventionally, in order to manage baggage to be transported, barcodes, which are machine-readable codes, are printed on media such as pieces of paper attached to the baggage.

For example, when a passenger checks air baggage at a check-in counter of an airline company to board an aircraft, a baggage tag is attached to the baggage as a baggage-attached tag. A barcode attached to the baggage tag is read by using a barcode reader and is recognized to sort and transport the baggage.

However, depending on a state (poor printing, paper wrinkles, angles, or the like) where the barcode is read by the barcode reader, a recognition rate may be decreased. In such a case, each time the barcode is read by the barcode reader, staff need to visually confirm the information in the barcode, and a burden is placed on the staff such as ground handlers.

Thus, in order to reduce the burden on the staff, some airports and airline companies have added an RFID (radio frequency identifier) tag to baggage tags (see, for example, PTL 1). Specifically, barcodes are replaced with RFIDs to be baggage-attached electronic tags. Thus, the recognition rate of identification numbers of air baggage has improved and has reduced the burden on the staff and erroneous delivery of baggage.

PTL 2 describes an asset tag comprising first and second wireless interfaces that transmit broadcast signals including first and second IDs. Specifically, the tag comprises a Bluetooth component and an NFC component. Both the Bluetooth component and the NFC component are encoded with an identifier (tag ID) unique to the tag, and the IDs for the Bluetooth component and the NFC component are the same

### [Citation List]

### [Patent Literature]

[PTL 1] JP 2001-240218 A
[PTL 2] US 2017/308845 A1

### [Summary of the Invention]

### [Technical Problem]

However, when the baggage-attached electronic tag of the PTL 1 is used as a baggage tag, in the baggage tag, the reading of a barcode is simply substituted by reading a UHF (ultrahigh frequency)-TID (tag identifier) written in an RFID tag IC (integrated circuit).

Thus, the electronic tag attached to a piece of baggage is used in order to sort pieces of baggage to be loaded onto an airplane using a conveyor belt, and the purpose of the electronic tag attached to a piece of baggage is not to improve user convenience but to reduce the burden on staff in charge of check-in or one in charge of baggage handling.

After users check-in online, if users themselves write information, for example, about an aircraft for which the users have checked in, in the baggage-attached electronic tag, the users can place the piece of baggage on the conveyor belt via a self-service automated baggage check-in machine or the like without checking the piece of baggage at a staffed counter.

When the users themselves write data in the baggage-attached electronic tag of the piece of baggage, the data is written by using a smartphone or the like. However, smartphones typically have no UHF interface and have no compatibility with the baggage-attached electronic tag disclosed in PTL 1.

### Amendments for prosecution in the EPO regional phase

Thus, in addition to UHF communication which may be provided to the baggage-attached electronic tag, an HF (high frequency) communication system or a Bluetooth (registered trademark) communication system which are compatible with the electronic tag may be added to the electronic tag.

For example, the baggage-attached electronic tag is equipped with tag IC having functions for the UHF communication system and the HF communication system.

However, as described above, a TID is assigned to the UHF tag. Thus, the TID or an EPC (electronic product code) is used as identification information of the UHF tag. On the other hand, as identification information of the HF tag, a UID (Unique Identifier) or an IDm (Manufacturer ID) is used.

In some cases, specific information, such as a GUID (globally unique identifier), written in an arbitrarily area in a semiconductor memory of electronic tags is used as identification information, and based on the identification information, the electronic tags are each identified.

Thus, when the baggage-attached electronic tag has tag IC functions for two different communication systems, different pieces of identification information are assigned to the respective functions.

Accordingly, even when check-in information is written in the HF communication IC tag, on the conveyor belt that transfers the piece of baggage, identification information of the UHF communication IC tag is read from the UHF communication IC tag. The identification information of the UHF communication IC tag differs from the identification information of the HF communication IC tag.

As described above, since the identification information of the HF communication IC tag and the identification information of the UHF communication IC tag are not unified, the check-in information written in the HF communication IC tag cannot be directly associated with the UHF communication IC tag.

Therefore, in order to associate the identification information of the HF communication IC tag with the identification information of the UHF communication IC tag, additional man-hours are required for each system in a database or a server. Thus, effective utilization of computer resources is hindered in an airline company and in a situation where an airline company links identification information with transportation companies or other companies.

The present invention has been made in view of the above circumstances, and provides an electronic tag device capable of easily associating interfaces, such as a UHF communication IC tag and an HF communication IC tag, that have identification information of different communication systems.

### [Solution to Problem]

This object is accomplished by the electronic tag device of claim 1. The dependent claims concern particular embodiments.

### [Advantageous Effects of the Invention]

The present invention provides an electronic tag device capable of easily associating interfaces, such as a UHF communication IC tag and an HF communication IC tag, that have identification information of different communication systems.

### [Brief Description of the Drawings]

Fig. 1 shows a configuration example of an electronic tag device according to an embodiment of the present invention.
Fig. 2A shows a configuration example of an identification information table written and stored in a storage unit 12S.
Fig. 2B shows a configuration example of an identification information table written and stored in a storage unit 13S.
Fig. 3 shows a configuration example of an identification information table written and stored in a storage unit 15.
Fig. 4 shows an example of the electronic tag device according to a third embodiment in which common identification information is written.
Fig. 5 shows another example of the electronic tag device according to the third embodiment in which common identification information is written.

### [Description of the Embodiments]

### <First embodiment>

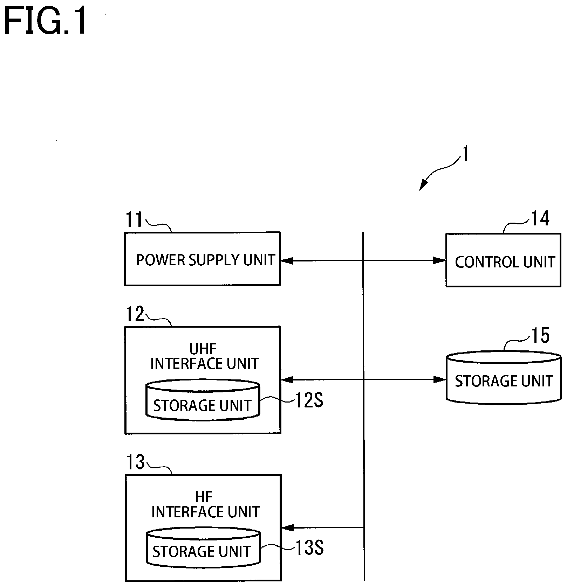

A first embodiment of the present invention will be described below with reference to the drawings. Fig. 1 shows a configuration example of an electronic tag device according to the first embodiment of the present invention.

In Fig. 1, an electronic tag device 1 includes a power supply unit 11, a UHF interface unit 12, an HF interface unit 13, a control unit 14, and a storage unit 15.

The power supply unit 11 supplies electric power required for driving the components in the electronic tag device 1. The power supply unit 11 is composed of, for example, a battery, and a charging circuit including a resonant circuit and a rectifier circuit for charging the battery.

The UHF interface unit 12 performs data communication with a tag reader/writer, which is an external device, by using a radio wave in a UHF band (ultrahigh frequency band, 860 MHz to 960 MHz) or the like. The UHF interface unit 12 includes a storage unit 12S that is managed by the UHF interface unit 12 by itself. For example, when a piece of baggage to be identified for management, on a conveyor belt, is one to be loaded onto an aircraft, common identification information (described later) held inside the storage unit 12S in the UHF interface unit 12 of the electronic tag device 1 attached to the piece of baggage is read by a UHF reader/writer provided in the vicinity of the conveyor belt.

The HF interface unit 13 performs data communication with a tag reader/writer, which is an external device, by using radio waves in an HF band (high frequency band, 13.56 MHz). The HF interface unit 13 includes a storage unit 13S that is managed by the HF interface unit 13 itself. For example, in the case of the piece of baggage to be loaded onto an aircraft, when a staff member loads the piece of baggage into a cargo container used to transport the piece of baggage to an airplane, common identification information (described later) held inside the storage unit 13S in the HF interface unit 13 of the electronic tag device 1 attached to the piece of baggage is read by an HF reader/writer attached to part of the arm of the staff member.

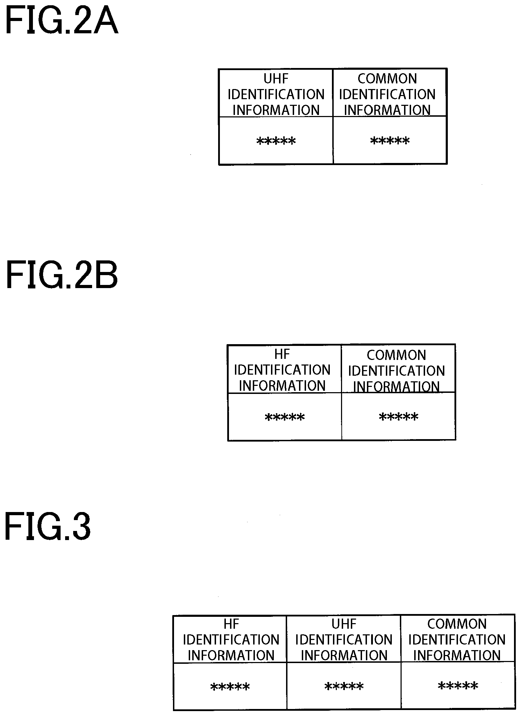

Fig. 2 shows configuration examples of identification information tables written and stored in the storage unit 12S and the storage unit 13S.

Fig. 2A shows the configuration example of the identification information table written and stored in advance in the storage unit 12S.

The identification information table written and stored in the storage unit 12S includes UHF identification information associated with common identification information. The UHF identification information is identification information set in advance in the UHF interface unit 12 and is, for example, a TID or an EPC. The common identification information is commonly used for the UHF interface unit 12 and the HF interface unit 13 of the electronic tag device 1.

Fig. 2B shows the configuration example of the identification information table written and stored in advance in the storage unit 13S.

The identification information table written and stored in the storage unit 13S includes HF identification information associated with common identification information. The HF identification information is identification information set in advance in the HF interface unit 13 and is, for example, a UID, or an IDm. The common identification information is commonly used for the UHF interface unit 12 and the HF interface unit 13 of the electronic tag device 1.

In Fig. 1, the control unit 14 writes and stores, for example, common identification information inputted from the outside source in the identification information table of each of the storage unit 12S of the UHF interface unit 12 and the storage unit 13S of the HF interface unit 13.

In the storage unit 15, for example, an application program used by each of the UHF interface unit 12 and the HF interface unit 13 for transmission/reception data is written and stored. Thus, by adding the common identification information to data transmitted to and received from the reader/writers, the UHF interface unit 12 and the HF interface unit 13 can share the identification information, and data associated with the UHF interface unit 12 and data associated with the HF interface unit 13 can be managed by using the shared common identification information.

As an example, if the piece of baggage to which an electronic tag including the electronic tag device 1 is attached is loaded onto an aircraft, the electronic tag device 1 is used as described below.

A user performs online check-in, and performs a process of writing journey data (flight number, departure place, destination, and the like) in the electronic tag device 1 by using a smartphone. At this time, the HF interface unit 13 writes and stores the user's journey data in a predetermined area of the storage unit 15 via the control unit 14.

In this case, the user may write all the journey data from the smartphone. Alternatively, the user may provide only authentication information from the smartphone, and when the smartphone is connected to the Internet and authentication confirmation from an airline company or the like is obtained, data including detailed information may be stored or displayed in a predetermined area of the storage unit 15 of the electronic tag device 1 from a server or the like on the internet.

When a piece of baggage is checked at a counter of the airline company, in order to sort baggage for each airplane, a flight number of the flight for which the piece of baggage is to be loaded is read from an electronic tag of the piece of baggage by communication with a UHF reader/writer arranged in the vicinity of a conveyor belt that transports the piece of baggage. At this time, the UHF reader/writer transmits data to the UHF interface unit 12 and receives data from the UHF interface unit 12. The UHF interface unit 12 reads the journey data in the storage unit 15 via the control unit 14, and transmits the journey data together with common identification information to the UHF reader/writer.

Thus, a path of the conveyor belt is switched according to the flight number, and the piece of baggage is transported through the path of the conveyor belt to a towing vehicle for transferring the piece of baggage to the airplane. At this time, the journey data to which the common identification information is added is transmitted to a management server of the airline company.

Next, when a staff member transfers the piece of baggage from the towing vehicle to an air container (cargo container) of the airplane, each time baggage is transferred, the common identification information is read from the electronic tag device 1 of the electronic tag of the piece of baggage by using an HF reader/writer that is attached to the arm of the staff member or possessed by the staff member. At this time, the HF reader/writer transmits data to the HF interface unit 13 and receives data from the HF interface unit 13. The HF interface unit 13 reads the journey data in the storage unit 15 via the control unit 14, and transmits the journey data together with the common identification information to the HF reader/writer.

Then, the HF interface unit 13 transmits the common identification information read from the HF reader/writer to the management server. Thus, the UHF interface unit 12 and the HF interface unit 13 can use the common identification information in a unified manner as identification information unique to the electronic tag device 1.

In the process described above, the transmission/reception of data to and from the electronic tag device 1 attached to the piece of baggage on the conveyor belt requires some communication range, and thus the HF reader/writer cannot be used.

Furthermore, when the piece of baggage is loaded into the air container, currently, aircraft data is read for each piece of baggage by using a barcode reader. Thus, as an application of this reading process, the journey data is read by using the HF reader/writer. At this time, the UHF reader/writer can be used to read data of the piece of baggage. However, due to an excessively larger communication range of the UHF reader/writer than the HF reader/writer, the UHF reader/writer also reads data from the electronic tag devices 1 attached to other pieces of baggage in the vicinity of the intended piece of baggage.

In this case, it is impossible to determine which electronic tag devices 1 attached to the pieces of baggage have had their data read. This is why, the data may be read from all the electronic tag devices 1 attached to the pieces of baggage. However, if there is a piece of baggage made of metal, communication between the UHF reader/writer and the electronic tag device 1 hidden behind the piece of baggage may be blocked. Therefore, data may substantially not be read. Therefore, in order to read data of the electronic tag devices 1 even in such a case, in the present embodiment, to be securely read data, the data reading process is performed for each electronic tag device 1 by using the HF reader/writer that reads data at a close distance.

In the configuration in Fig. 1 described above, the UHF interface unit 12 and the HF interface unit 13 may be formed of different chips, or may be formed as interface units on a single chip.

Furthermore, together with the control unit 14 and the storage unit 15, each of the UHF interface unit 12 and the HF interface unit 13 may be configured as a single-chip device.

### <Method of generating common identification information>

A method of generating the common identification information mentioned above will be described below.

### • Generation method combining TID with IDm

The control unit 14 reads a TID as the UHF identification information from the storage unit 12S of the UHF interface unit 12, and reads an IDm as the HF identification information from the storage unit 13 S of the HF interface unit 13.

For example, the control unit 14 extracts the first 64 bits as part of the TID, and extracts the last 64 bits as part of the IDm. Then, the control unit 14 combines the extracted first 64 bits of the TID with the extracted last 64 bits of the IDm to generate 128-bit common identification information.

The control unit 14 writes the generated common identification information in the identification information table of each of the storage unit 12S of the UHF interface unit 12 and the storage unit 13 S of the HF interface unit 13.

The control unit 14 may also be configured to write the generated common identification information in the storage unit 15.

Fig. 3 shows a configuration example of an identification information table written and stored in the storage unit 15.

The identification information table stores UHF identification information, HF identification information, and common identification information associated with one another. The UHF identification information is read from the storage unit 12S of the UHF interface unit 12 and is, for example, a TID. The HF identification information is read from the storage unit 13 S of the HF interface unit 13 and is, for example, an IDm. The common identification information is identification information in which the first 64 bits of the TID are combined with the last 64 bits of the IDm.

### • Generation method combining TID with UID

The control unit 14 reads a TID as the UHF identification information from the storage unit 12S of the UHF interface unit 12, and reads a UID as the HF identification information from the storage unit 13S of the HF interface unit 13.

With regard to subsequent procedures, in the above-described process of generating common identification information by combining a TID with an IDm, by replacing the TID with an EPC and replacing the IDm with an UID, a similar process is performed, and thus detailed description of the subsequent procedures is omitted.

### A. Method for generating original 128-bit identification information

A UUID (universally unique identifier), a GUID (globally unique identifier), or the like may be generated to be used. The control unit 14 generates original common identification information by using time information (or time), a MAC address in a communication function of the control unit 14, a device ID, or the like.

### B. Method for using address of communication device

In order to improve connectivity to the Internet, common identification information may be generated by combining a MAC address (64 bits) of a smartphone with an address of a Bluetooth (registered trademark) device (64 bits).

For example, assuming that the electronic tag device 1 includes a Bluetooth (registered trademark) interface unit in addition to the UHF interface unit 12 and the HF interface unit 13, if journey data in which the user checked in by using a smartphone is written in the electronic tag device 1, a MAC address (64 bits) of the smartphone and an address of a Bluetooth (registered trademark) device are transmitted together with the journey data to the electronic tag device 1. Thus, the HF interface unit 13 transmits the addresses of the MAC device and the Bluetooth (registered trademark) device to the control unit 14. The control unit 14 combines the address of the MAC device with the address of the Bluetooth (registered trademark) device to generate common identification information.

### C. Method for expanding TID

Data obtained by adding some information such as positional information or time information to a TID or bit data obtained by reducing the number of bits of the TID is used as the common identification information.

For example, when journey data on check-in performed by using a smartphone is written in the electronic tag device 1, latitude and longitude information measured by using a GPS (global positioning system) function mounted to the smartphone is transmitted to the electronic tag device 1 together with the journey data. Thus, the HF interface unit 13 transmits the latitude and longitude information and the journey data to the control unit 14.

The control unit 14 reads a TID, which is the UHF identification information, from the storage unit 12S of the UHF interface unit 12. The control unit 14 combines the latitude and longitude information with the TID to generate common identification information. The data used for the combination is not limited to the latitude and longitude information, and some data including time information may be used. By combining 32-bit latitude and longitude information with a 96-bit TID, 128-bit common identification information is generated.

In the present embodiment, the 128-bit common identification information is generated, but the number of bits of the common identification information is not limited to 128 bits. However, in order to obtain identification information that allows effective identification of the electronic tag device 1, if possible, the number of bits of the common identification information is preferably 128 bits or more.

The control unit 14 writes and stores the generated common identification information in the storage unit 15. After that, each of the UHF interface unit 12 and the HF interface unit 13 uses the common identification information stored in the storage unit 15 as identification information of the electronic tag device 1.

### D. Method for using data different from identification information

The common identification information may be data that has a different value from a TID stored in memory bank 10 or an EPC stored in memory bank [01] defined by EPC Class 1 Gen2 and ISO/IEC 18000-63 and that is, for example, data written in a user area of memory bank [11], which is, for example, character (including number) string data arbitrarily generated by using random numbers, pseudorandom numbers, or the like.

The process of generating common identification information by the methods A to D described above may be performed by a management server of an airline company.

In this case, the control unit 14 transmits information for generating common identification information to the management server, and the common identification information generated at the management server is supplied. The supplied common identification information may be written in the identification information table of each of the storage unit 12S of the UHF interface unit 12 and the storage unit 13S of the HF interface unit 13, or may be written in the storage unit 15. When the common identification information is written in the storage unit 15, each of the UHF interface unit 12 and the HF interface unit 13 reads the common identification information from the storage unit 15 via the control unit 14.

With the configuration described above, according to the present embodiment, in the case of the electronic tag device 1 including interfaces of a plurality of communication system standards such as the UHF interface unit 12, the HF interface unit 13, and the Bluetooth (registered trademark) interface unit, instead of using pieces of identification information of the respective interfaces, common identification information is generated and used. Thus, in a database of the management server, the electronic tag devices 1 can be managed by using the common identification information. Accordingly, in the management server database, the relationship between the pieces of identification information do not need to be managed between databases that are compatible with the interfaces of the respective standards, leading to an improvement in processing speed and a reduction in cost.

Thus, according to the present embodiment, pieces of identification information provided to respective interfaces of different communication systems such as an HF communication IC tag and a UHF communication IC tag can be easily associated with each other in a database or a server. Thus, computer resources are effectively utilized.

According to the present embodiment, by using an interface suitable for use, such as after the piece of baggage is checked in, airplane data at the check-in is acquired during transferring of the piece of baggage by the conveyor belt or when the airplane data is acquired during transferring of the piece of baggage from the towing vehicle to the air container, the airplane data can be associated between different interfaces by using the common identification information, thereby improving productivity of the process without causing actual operational burden.

According to the present embodiment, in the case where the common identification information is stored in the storage unit 15, and each of the UHF interface unit 12 and the HF interface unit 13 reads the common identification information via the control unit 14, by providing the control unit 14 with a security processing function, it is possible to improve physical security performance against an attack involving rewriting the identification information in the UHF interface unit 12 and the HF interface unit 13.

Furthermore, in devices of different communication bands, i.e., the UHF band and the HF band, a TID and a UID are used, respectively, as different identification information. Thus, in order to allow the devices in the UHF band and in the HF band to identify electronic tag devices, a table in which the TID is associated with the UID is required to be used.

However, if the table in which the TID is associated with the UID is provided and used in servers, offline reader/writer devices, automated baggage check-in machines, and the like of airline companies or the like, when a journey ends or is changed, it is difficult to rewrite the table in the servers or the devices in real time.

As information that allows tracking (traceability) and individual identification, UIDs are managed by semiconductor manufacturing companies so that identical numbers are not distributed. UIDs are written in a fixed format inside IC tags during manufacturing of the IC tags. As with UIDs, TIDs are also managed by the semiconductor manufacturing companies as information that allows tracking and individual identification. TIDs are written in a fixed format inside IC tags during manufacturing of the IC tags.

Thus, basically, UIDs and TIDs cannot be rewritten as other information later.

However, according to the present embodiment, the fixed identification information such as a UID, a TID, and an IDm are not used alone. Instead, at least two of these types of identification information are combined or arbitrary identification information is used as the common identification information, and in the electronic tag device, the common identification information can be arbitrarily rewritten, and the common identification information can be rewritten in real time.

Accordingly, when the electronic tag device is not disposed of after a single use and is used for another journey, and even when in an airline company, identification information recorded in a server is not synchronized with information stored in an offline device, unlike a conventional example, in the present embodiment, identical identification information is not provided to a plurality of pieces of baggage. Thus, in the present embodiment, as the common identification information, the identification information of the electronic tag device can be arbitrarily rewritten. Accordingly, the identification information can be changed for each journey, thereby improving the tracking and individual identification function. Specifically, in the present embodiment, each time a journey of a piece of baggage or the like is changed, the common identification information of the electronic tag device attached to the piece of baggage is changed, and the common identification information is overwritten in the storage unit of the electronic tag device. Therefore, in the present embodiment, even when the journey is changed or the electronic tag device used in another journey, the electronic tag device can be reused.

Thus, in the present embodiment, each time the journey is changed, the common identification information is changed. Accordingly, the electronic tag device can be used for an EBT (Electronic Baggage Tag) which is expensive, and it is possible to prevent a plurality of EBTs from having identical identification information to thereby improve usability. Furthermore, the improved usability increases the number of users of EBTs, and a larger number of EBTs are manufactured accordingly, resulting in a reduction in production cost of EBTs.

As compared with the case where a UID, a TID, or the like is individually used to identify a piece of baggage, in the present embodiment, the common identification information is used between devices using different bands, i.e., the UHF band and the HF band (hereinafter referred to as devices using different bands). Therefore, for the piece of baggage, association between devices using different bands is easily performed even offline. Thus, according to the present embodiment, even when a delay occurs in updating of the identification information between the devices using different bands performed via a server of an airline company for managing itineraries, by using the common identification information, the identification information can be shared between the devices using different bands. This allows reading or writing of the identification information between the devices using different bands, and thus, prevents erroneous identification of the pieces of baggage between the devices using different bands.

### <Second embodiment>

In a second embodiment, common identification information is generated to include information (including identification information) managed by a server that provides service for baggage different from the baggage service provided by airline companies.

Other than "D. method for using data different from identification information" described in the first embodiment, the common identification information may also have the following configuration.

### E. Adding slip number of a land transportation company in addition to identification information of airline company in common identification information

As the common identification information, identification information is obtained by coupling identification information (10 digits) of an airline company with a slip number (12 digits) of a transportation company. For example, a server of the airline company generates common identification information in which identification information (10 digits) of the airline company is coupled with a slip number (12 digits) of the transportation company. Thus, seamless transportation of baggage in a journey can be achieved including transportation of the baggage from home to an airport on the outward trip, baggage check-in for an airplane, and transportation of the baggage from the airport to home on the return trip. Furthermore, the probability of generating identical identification information is extremely low. For example, by reading the last 12 digits of the common identification information using a reader/writer device, the transportation company can perform a baggage delivery process as in the conventional process.

### F. Adding information such as slip number of a land transportation company and identification information related to other types of service in addition to identification information of airline company in common identification information

For example, a server of an airline company generates common identification information in which identification information (10 digits) of the airline company, a slip number (12 digits) of a transportation company, and additional information of a third party are coupled together. Thus, in addition to the configuration "E" described above, for example, when the piece of baggage is checked in, weight data outputted from a measuring device of the third party for measuring a weight of the piece of baggage can be added to the common identification information, and this facilitates baggage weight management during transportation.

### G. Adding slip number of a land transportation company and other types of identification information to identification information of airline company

For example, a server of an airline company generates common identification information in which identification information (10 digits) of the airline company, a slip number (12 digits) of a land transportation company, and other types of identification information are coupled together. Examples of other types of identification information include a seed ID for blockchain management and a slip number of a land transportation company in a country other than Japan.

The common identification information may be common identification information in which the following information is added to the common identification information A to D (first embodiment) and the common identification information E to G described above.
- Session ID: Identification information (for example, random numbers or the like are used) provided for each session (a single session refers to a period from the start of a journey to the end thereof)
- User ID: Identification information provided for each user account, for example, information provided in a frequent user program (conducted by an airline company or the like) in which a user who corresponds to a journey is enrolled
- Device ID: Identification information provided for each terminal such as a smartphone or an EBT
- Time stamp information: Issue date (may also include time information) of an itinerary in which a tag is used
- CA (Certification Authority) information: Information (electronic certificate) that authenticates a device EBT which includes, for example, the IATA (route CA), an airline company (second CA), a predetermined company (third CA), and the like

As described above, in the present embodiment, the common identification information is generated by combining identification information of the airline company with additional information such as a slip number of the transportation company. Accordingly, the probability of providing, to an IC tag, the same number as that of other IC tags is lower than in the first embodiment, thereby improving the tracking and individual identification function.

Furthermore, according to the present embodiment, the land transportation company can read the slip number in the common identification information by using the reader/writer device. Thus, the land transportation company can use the existing reader/writer device, and does not need to change their delivery system significantly. Therefore, the existing server provided in the delivery system can be utilized to perform delivery management of baggage to which the electronic tag device is attached. Thus, with regard to the identification information for the service of the airline company and the land transportation company in the common identification information, by extracting necessary information from the common identification information, the airline company and the land transportation company can each provide baggage management service of the company or organization uniquely connected to the electronic tag device without the necessity of interfacing to servers of a different company or organization.

### <Third embodiment>

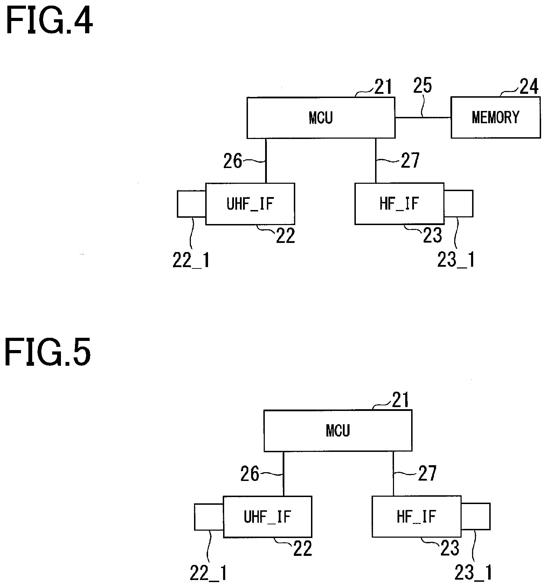

Fig. 4 shows an example of the electronic tag device according to a third embodiment in which common identification information is written. In Fig. 4, an MCU (Micro Control Unit) 21 corresponds to the control unit 14 in Fig. 1. A memory 24 is, for example, a non-volatile memory, and corresponds to the storage unit 15 in Fig. 1. A UHF_IF 22 corresponds to the UHF interface unit 12 in Fig. 1. An HF_IF 23 corresponds to the HF interface unit 13 in Fig. 1. Memories 22_1 and 23_1 correspond to the storage units 12S and 13S in Fig. 1, respectively.

The MCU 21 is, for example, a single-chip microcontroller. The MCU 21 is connected to the UHF _IF 22 and the HF_IF23 at different I/O (input/output) ports, for example, via an I²C (Inter Integrated Circuit) bus (registered trademark) as a serial bus. The MCU 21 is also connected to the memory 24, for example, via an I²C bus (registered trademark) or the like as a serial bus. Instead of the serial bus composed of a single wire, the MCU 21 may be connected to each of the UHF IF 22 and the HF_IF23 by using a parallel bus composed of a plurality of wires.

The memory 24 stores the application program used by the UHF_IF 22 and the HF_IF 23 already mentioned in the description of the storage unit 15. The MCU 21 writes, in the memory 24, common identification information supplied from the outside source. Thus, when UHF _IF22 and HF_IF23 transmit data to a UHF reader/writer and an HF reader/writer, respectively, the common identification information written in the memory 24 is read, and together with the data, the common identification information is outputted to the reader/writers.

Fig. 5 shows another example of the electronic tag device according to the third embodiment in which common identification information is written.

In Fig. 5, the memory 24 is not present, and the application programs used by the UHF_IF 22 and the HF_IF 23 are written in the memory 22_1 and the memory 23_1, respectively.

The MCU 21 writes, in each of the memories 22_1 and 23_1, common identification information supplied from an external source.

Thus, when the UHF_IF 22 and the HF_IF 23 output data to a reader/writer device as a UHF communication target device and a reader/writer device as an HF communication target device, respectively, the UHF_IF 22 and the HF_IF 23 read the common identification information written in the memory 22_1 and the memory 23_1, respectively. Then, together with the data, the common identification information is outputted via the UHF_IF 22 and the HF_IF 23 to the reader/writer devices with which the UHF _IF 22 and the HF_IF 23 can communicate, respectively.

In the first to third embodiments, the common identification information may be written in the storage unit (memory), for example, at the following timings.

### • Timing #1

If the piece of baggage is checked at an automated baggage check-in machine of an airline company, common identification information is supplied from the automated baggage check-in machine. The MCU 21 writes, in the storage unit (memory), the common identification information inputted via the UHF _IF 22 or the HF_IF 23. In this case, the automated baggage check-in machine is assumed to be equipped with a UHF reader/writer or equipped with an NFC (Near Field Communication) device or a BLE (Bluetooth Low Energy) device.

### • Timing #2

By the time a piece of baggage is checked at home or at an airport, through a BLE network, a user performs online check-in. Then, a check-in server issues common identification information which is transferred to an EBT, for example, by using a mobile terminal. Thus, the MCU 21 writes the common identification information inputted via the UHF IF 22 or the HF_IF 23 to the storage unit (memory) of the EBT.

### • Timing #3

In a company or in a distribution scene of international home delivery service and international transportation, at a site where baggage is sorted for delivery, common identification information is supplied from a server that sorts the baggage to the electronic tag device via the UHF_IF 22 or the HF_IF 23. The MCU 21 writes, in the storage unit (memory), the common identification information inputted via the UHF _IF 22 or the HF_IF 23.

A program for implementing the function of using the common identification information of the electronic tag device 1 shown in Fig. 1 of the present embodiment may be recorded in a computer-readable recording medium, and the program recorded in the recording medium may be read and executed by a computer system to thereby perform a process related to application installation and service for an IC card. The computer system herein refers to one that includes an operating system (OS) and hardware such as peripheral devices.

The "computer system" includes an environment providing (or displaying) websites, if a WWW (World Wide Web) system is used.

The "computer-readable recording medium" refers to a storage device such as a portable medium such as a flexible disk, a magneto-optical disk, a ROM, or a CD-ROM, or a hard disk incorporated in a computer system.

The computer-readable recording medium may include a medium that dynamically retains a program for a short period of time, such as a communication line that transmits a program through a network such as the internet or a telecommunication line such as a telephone line, or a medium that retains the program for a given period of time in that case, such as a volatile memory of a computer system that serves as a server or a client. The program may be designed to implement some of the functions described above. Furthermore, the program may be a differential file that implements the above functions in combination with another program already recorded in the computer system.

P20171089 The embodiments of the present invention have been described in detail above with reference to the drawings. However, the specific configurations should not be limited to these embodiments, but should include designs within the scope of the present invention.

### [Reference Signs List]

1 ... Electronic tag device
11 ... Power supply unit
12 ... UHF interface unit
12S, 13S, 15 ... Storage unit
13 ... HF interface unit
14 ... Control unit

## Claims

1. An electronic tag device (1) comprising:
a first interface to a first communication system;
a second interface to a second communication system different from the first communication system;
a first interface unit (12) that is compatible with the first communication system and manages first identification information that identifies the first interface unit; and
a second interface unit (13) that is compatible with the second communication system and manages second identification information that identifies the second interface unit, **characterized in that**
common identification information that identifies each of the first and second interface units is provided,
the common identification information differs from the first and second identification information, and
data written in the first and second interface units is managed by using the common identification information.

2. The electronic tag device (1) according to claim 1, wherein the common identification information is written and stored in a storage unit of each of the first and second interface units.

3. The electronic tag device (1) according to claim 1, wherein the common identification information is written and stored in a storage unit to which each of the first and second interface units is accessible.

4. The electronic tag device (1) according to any one of claims 1 to 3, wherein the common identification information is generated as data different from the first and second identification information.

5. The electronic tag device (1) according to any one of claims 1 to 3, wherein the common identification information is generated by using part of each of the first and second identification information.

6. The electronic tag device (1) according to any one of claims 1 to 5, wherein the common identification information is generated inside the electronic tag device.

7. The electronic tag device (1) according to any one of claims 1 to 5, wherein the common identification information is generated by a management server that manages the electronic tag device.

8. The electronic tag device (1) according to any one of claims 1 to 7, wherein the common identification information includes information used for another type of service different from a baggage management service in a journey.

9. The electronic tag device (1) according to claim 8, wherein the other type of service is a baggage delivery service including home delivery.

10. The electronic tag device (1) according to any one of claims 1 to 9, wherein the common identification information is changed each time a change occurs to a journey for a piece of baggage to which the electronic tag device is attached.

## Patentansprüche

1. Elektronische Etikettvorrichtung (1), umfassend:
eine erste Schnittstelle zu einem ersten Kommunikationssystem;
eine zweite Schnittstelle zu einem zweiten Kommunikationssystem, das sich von dem ersten Kommunikationssystem unterscheidet;
eine erste Schnittstelleneinheit (12), die mit dem ersten Kommunikationssystem kompatibel ist und erste Identifizierungsinformationen verwaltet, die die erste Schnittstelleneinheit identifizieren; und
eine zweite Schnittstelleneinheit (13), die mit dem zweiten Kommunikationssystem kompatibel ist und zweite Identifizierungsinformationen verwaltet, die die zweite Schnittstelleneinheit identifizieren, **dadurch gekennzeichnet, dass**
gemeinsame Identifizierungsinformationen bereitgestellt sind, die jede der ersten und zweiten Schnittstelleneinheit identifizieren,
die gemeinsamen Identifizierungsinformationen sich von den ersten und zweiten Identifizierungsinformationen unterscheiden und
Daten, die in die erste und zweite Schnittstelleneinheit geschrieben sind, unter Verwendung der gemeinsamen Identifizierungsinformationen verwaltet werden.

2. Elektronische Etikettvorrichtung (1) nach Anspruch 1, wobei die gemeinsamen Identifizierungsinformationen in eine Speichereinheit jeder der ersten und zweiten Schnittstelleneinheit geschrieben sind und darin gespeichert werden.

3. Elektronische Etikettvorrichtung (1) nach Anspruch 1, wobei die gemeinsamen Identifizierungsinformationen in eine Speichereinheit geschrieben sind und darin gespeichert werden, auf die jede der ersten und zweiten Schnittstelleneinheit zugreifen kann.

4. Elektronische Etikettvorrichtung (1) nach einem der Ansprüche 1 bis 3, wobei die gemeinsamen Identifizierungsinformationen als Daten erzeugt werden, die sich von den ersten und zweiten Identifizierungsinformationen unterscheiden.

5. Elektronische Etikettvorrichtung (1) nach einem der Ansprüche 1 bis 3, wobei die gemeinsamen Identifizierungsinformationen unter Verwendung eines Teils jeder der ersten und zweiten Identifizierungsinformationen erzeugt werden.

6. Elektronische Etikettvorrichtung (1) nach einem der Ansprüche 1 bis 5, wobei die gemeinsamen Identifizierungsinformationen in der elektronischen Etikettvorrichtung erzeugt werden.

7. Elektronische Etikettvorrichtung (1) nach einem der Ansprüche 1 bis 5, wobei die gemeinsamen Identifizierungsinformationen durch einen Verwaltungsserver erzeugt werden, der die elektronische Etikettvorrichtung verwaltet.

8. Elektronische Etikettvorrichtung (1) nach einem der Ansprüche 1 bis 7, wobei die gemeinsamen Identifizierungsinformationen Informationen beinhalten, die für eine andere Art von Dienst verwendet werden als einen Gepäckverwaltungsdienst bei einer Reise.

9. Elektronische Etikettvorrichtung (1) nach Anspruch 8, wobei die andere Art von Dienst ein Gepäckzustelldienst ist, beinhaltend Heimzustellung.

10. Elektronische Etikettvorrichtung (1) nach einem der Ansprüche 1 bis 9, wobei die gemeinsamen Identifizierungsinformationen immer dann geändert werden, wenn eine Änderung bei einer Reise für ein Gepäckstück auftritt, an dem die elektronische Etikettvorrichtung befestigt ist.

## Revendications

1. Dispositif d'étiquette électronique (1) comprenant :
une première interface à un premier système de communication ;
une seconde interface à un second système de communication différent du premier système de communication ;
une première unité d'interface (12) qui est compatible avec le premier système de communication et gère des premières informations d'identification qui identifient la première unité d'interface ; et
une seconde unité d'interface (13) qui est compatible avec le second système de communication et gère des secondes informations d'identification qui identifient la seconde unité d'interface, **caractérisé en ce que**
des informations d'identification communes qui identifient chacune des première et seconde unités d'interface sont fournies,
les informations d'identification communes diffèrent des premières et secondes informations d'identification, et
des données écrites dans les première et seconde unités d'interface sont gérées en utilisant les informations d'identification communes.

2. Dispositif d'étiquette électronique (1) selon la revendication 1, dans lequel les informations d'identification communes sont écrites et stockée dans une unité de stockage de chacune des première et seconde unités d'interface.

3. Dispositif d'étiquette électronique (1) selon la revendication 1, dans lequel les informations d'identification communes sont écrites et stockées dans une unité de stockage qui est accessible à chacune des première et seconde unités d'interface.

4. Dispositif d'étiquette électronique (1) selon l'une quelconque des revendications 1 à 3, dans lequel les informations d'identification communes sont produites comme des données différentes des premières et secondes informations d'identification.

5. Dispositif d'étiquette électronique (1) selon l'une quelconque des revendications 1 à 3, dans lequel les informations d'identification communes sont produites en utilisant une partie de chacune des premières et secondes informations d'identification.

6. Dispositif d'étiquette électronique (1) selon l'une quelconque des revendications 1 à 5, dans lequel les informations d'identification communes sont produites à l'intérieur du dispositif d'étiquette électronique.

7. Dispositif d'étiquette électronique (1) selon l'une quelconque des revendications 1 à 5, dans lequel les informations d'identification communes sont produites par un serveur de gestion qui gère le dispositif d'étiquette électronique.

8. Dispositif d'étiquette électronique (1) selon l'une quelconque des revendications 1 à 7, dans lequel les informations d'identification communes incluent des informations utilisées pour un autre type de service différent d'un service de gestion de bagages dans un voyage.

9. Dispositif d'étiquette électronique (1) selon la revendication 8, dans lequel l'autre type de service est un service de livraison de bagages incluant la livraison à domicile.

10. Dispositif d'étiquette électronique (1) selon l'une quelconque des revendications 1 à 9, dans lequel les informations d'identification communes sont changées chaque fois qu'un changement se produit lors d'un voyage pour une pièce de bagages à laquelle le dispositif d'étiquette électronique est attaché.
